# EUROPEAN PATENT APPLICATION

(11) **EP 4 778 904 A1**
(43) Date of publication of application: **22.07.2026**
(21) Application number: 25152851.9
(22) Date of filing: 20.01.2025
(51) Int. Cl.: C04B 28/14, C04B 28/06, C04B 7/02, C04B 7/32, C04B 24/38, C04B 103/44, C04B 103/10, C04B 103/65

(54) **COMPOSITIONS COMPRISING PORTLAND CEMENT, CALCIUM ALUMINATE CEMENT, CALCIUM SULFATE, AND SUPERABSORBENT POLYMER AND USES THEREOF FOR THE TILING OF SURFACES**

(71) Applicant: Sika Technology AG, 6340 Baar (CH)
(72) Inventor: VALLURUPALLI, Kavya, Beachwood, 44122 (US); BOON, Gary, Lyndhurst, 07071 (US); GARCIA, Carlos, 251017 Tocancipá (CO); PENA, Juan, 66350 Santa Catarina (MX)
(74) Representative: Sika Patent Attorneys

(57) **Abstract**

The present invention relates to cementitious binder compositions and dry mortars compositions comprising Portland cement, calcium aluminate cement, calcium sulfate, and superabsorbent polymer. The present invention also relates to methods for tiling of surfaces using such compositions.

## Description

### Technical Field

The present invention relates to compositions comprising Portland cement, calcium aluminate cement, calcium sulfate, and superabsorbent polymer useful for the tiling of surfaces.

### Background of the invention

The use of thinset mortars as cementitious tile adhesives is well known in the art. Thinset mortars have been applied as tile adhesives for various reasons. One reason being that a large surface area may be covered with a relatively low volume of such mortars.

Technologically, thinset mortars rely on water-retaining agents to retain water upon mixing and release water during hardening. A well-known class of water-retaining agents are superabsorbent polymers (SAP).

For example US 2010/0190888 A1 discloses a cement based building material comprising a superabsorbent polymer which is useful as tile adhesive. However, compositions according to US 2010/0190888 A1 require calcium formate, calcium chloride, or calcium nitrate to accelerate the hardening. Such accelerators can lead to problems in terms of chemical compatibility with other constituents of the composition and also have issues with environment, health and safety.

It is also known to employ calcium aluminate cement in cementitious tile adhesives to achieve fast setting and hardening. For example, US 9,252,009 B2 discloses cementitious tile adhesives comprising a ternary binder having calcium aluminate cement and superabsorbent polymers. However, it is difficult with compositions disclosed therein to meet requirements of tiling standards, especially with regards to open time and adhesion strength development.

There is thus a continued need for improved compositions useful as cementitious tile adhesives, especially in thinset applications.

### Summary of the invention

It is an object of the present invention to provide cementitious binder compositions useful as cementitious tile adhesives. It is another object of the present invention to provide dry mortar compositions useful as cementitious tile adhesives. Especially, the cementitious binder compositions or dry mortar compositions should be useful in thinset applications. It is also an object of the present invention to provide methods for the tiling of surfaces.

Surprisingly, it has been found that an optimized cementitious binder component comprising Portland cement, calcium aluminate cement, calcium sulfate, and superabsorbent polymer can meet advanced requirements of workability, open time, and adhesion strength development relevant for cementitious tile adhesives.

The objectives of the present invention are therefore solved by a cementitious binder compositions as claimed in claim 1.

Further aspects of the present invention are the subject matter of independent claims.

Preferred embodiments are the subject matter of dependent claims.

### Detailed Ways

In a first aspect the present invention relates to a cementitious binder composition comprising, in each case relative to the total dry weight of cementitious binder composition,
a) not more than 50 w% of Portland cement,
b) not less than 25 w% of calcium aluminate cement,
c) not more than 10 w%, preferably not more than 8 w% of calcium sulfate,
d) 1 - 2 w% of at least one superabsorbent polymer,
characterized in that a weight ratio of calcium aluminate cement to Portland cement is 1 or higher.

Portland cement may be Ordinary Portland Cement or may be a blended cement or a composite cement comprising one or more supplementary cementitious materials.

Supplementary cementitious materials may in particular be chosen from limestone, ground granulated blast furnace slag, silica fume, natural pozzolans, fly ash and/or oil shale.

According to embodiments, Portland cement is chosen from cements according to standard EN 197-1 or EN 197-5. For example, Portland cement can be chosen from CEM I, CEM II, CEM III, CEM IV, or CEM V according to standard EN 197-1, or from CEM II or CEM VI according to standard EN 197-5.

According to embodiments, Portland cement is chosen from cements according to standard ASTM C150-07. In particular, Portland cement is of type I, IA, II, IIA, III, IIIA, IV, or V according to standard ASTM C150-07.

A particularly suitable Portland cement is Portland limestone cement, for example cement CEM II/A-L, CEM II/B-L, CEM II/A-LL, or CEM II/B-LL according to standard EN 197-1; cement CEM VI (S-L) or CEM VI (S-LL) according to standard EN 197-5; or Portland cement type 1L.

Calcium aluminate cement is a material comprising one or more of the mineral phases CA, CA2, and C12A7 (with C: CaO, A: Al₂O₃) Further mineral and/or amorphous phases may additionally be present. The phase composition may be evaluated by XRD. Calcium aluminate cement of the present invention comprise CaO, Al₂O₃, and typically also smaller amounts of Fe₂O₃, and SiO₂. For example, calcium aluminate cement can be according to standard EN 14647:2005.

According to embodiments, the calcium aluminate cement comprises Al₂O₃ and CaO in a weight ratio of Al₂O₃ to CaO of 1 or higher. Thereby, the w% of CaO and Al₂O₃ are measured by XRF.

Calcium sulfate may be chosen from calcium sulfate dihydrate, calcium sulfate hemihydrate, calcium sulfate anhydrite, or mixtures thereof. Preferably, calcium sulfate is calcium sulfate anhydrite. If the content if calcium sulfate dihydrate is too high, problems with fast setting and curing may occur.

A superabsorbent polymer within the context of the present invention is a polymer which can absorb, retain, and release large amounts of a liquid, especially of water, relative to its own mass. A superabsorbent polymer may thus absorb up to 500 times its own weight of water and may swell to a considerable degree.

A superabsorbent polymer of the present invention may be characterized by a water absorbency under a load of 40 g/cm² of at least 15 g/g polymer, preferably at least 20 g/g polymer, more preferably at least 22 g/g polymer. A superabsorbent polymer of the present invention may also release part or all of the absorbed water.

According to embodiments, the superabsorbent polymer of the present invention is a solid, preferably a fine powder. In the preferred case of the superabsorbent polymer being a powder, the said powder is characterized by a particle size distribution with particle sizes of the superabsorbent polymer of between 20 - 3000 µm, preferably between 50 - 1000 µm, more preferably between 90 - 850 µm. The particle size distribution may be obtained by sieving the powder through sieves with different openings. The particle size distribution can be determined by a method as described in ASTM C136 and ASTM C117.

According to embodiments, the at least one superabsorbent polymer is selected from the group consisting of modified starches, modified celluloses, polyacrylamides, polyacrylonitriles, polyvinyl alcohols, isobutylene maleic anhydride copolymers, polyvinylpyrrolidone, homo- and copolymers of monoethylenically unsaturated carboxylic acids, such as (meth)acrylic acid, crotonic acid, sorbic acid, maleic acid, fumaric acid, itaconic acid, preferably polyacrylic acid, which can be partially or fully neutralized, and co- and terpolymers of the said monoethylenically unsaturated carboxylic acids with vinylsulfonic acid, (meth)acrylamidoalkylsulfonic acid, allylsulfonic acid, vinyltoluenesulfonic acid, vinylphosphonic acid, (meth)acrylamide, N-alkylated (meth)acrylamide, N-methylol(meth)acrylamide, N-vinylamide, N-vinylformamide, N-vinylacetamide, vinylpyrrolidon, hydroxyalkyl(meth)acrylate, ethylacrylate, methylacrylate, (meth)acrylic acid esters of polyethyleneglycolmonoallylethers, vinylacetate and/or styrene.

Very preferably, the at least one superabsorbent polymer is selected from the group consisting of crosslinked polyacrylamides, crosslinked polyacrylates, which can be partially or fully neutralized, and mixtures thereof. The use of at least one superabsorbent polymer selected from the group consisting of crosslinked polyacrylamides, crosslinked polyacrylates, which can be partially or fully neutralized, in an amount of 1 - 2 w% relative to the total dry weight of cementitious binder composition leads to particular high yield or coverage and prevents fast drying out of an applied wet mixture.

Portland cement is present in the cementitious binder composition of the present invention in not more than 50 w%. Portland cement may not be completely absent in a cementitious binder composition of the present invention. However, a small amount of Portland cement may be sufficient to bring about the desired effects.

Calcium aluminate cement is present in the cementitious binder composition of the present invention in not less than 25 w%. The amount of calcium aluminate present may be high but must be lower than 100 w%. This is due to the fact that the cementitious binder composition comprises, besides calcium aluminate cement, also Portland cement, calcium sulfate, and superabsorbent polymer.

Calcium sulfate is present in the cementitious binder composition of the present invention in not more than 10 w%, preferably not more than 8 w%. Calcium sulfate may not be completely absent in a cementitious binder composition of the present invention. However, a small amount of calcium sulfate may be sufficient to bring about the desired effects.

According to embodiments, the cementitious binder composition of the present invention comprises, in each case relative to the total dry weight of the composition,
a) 15 - 50 w% of Portland cement,
b) 30 - 70 w% of calcium aluminate cement,
c) 3 - 8 w% of calcium sulfate,
d) 1 - 2 w% of at least one superabsorbent polymer,
characterized in that a weight ratio of calcium aluminate cement to Portland cement is 1 or higher.

According to embodiments, the cementitious binder composition of the present invention comprises, in each case relative to the total dry weight of the composition,
a) 40 - 50 w% of Portland cement,
b) 40 - 55 w% of calcium aluminate cement,
c) 3 - 8 w% of calcium sulfate,
d) 1 - 2 w% of at least one superabsorbent polymer,
characterized in that a weight ratio of calcium aluminate cement to Portland cement is 1 or higher.

According to embodiments, the cementitious binder composition of the present invention comprises, in each case relative to the total dry weight of the composition,
a) 15 - 30 w% of Portland cement,
b) 60 - 70 w% of calcium aluminate cement,
c) 3 - 8 w% of calcium sulfate,
d) 1 - 2 w% of at least one superabsorbent polymer,
characterized in that a weight ratio of calcium aluminate cement to Portland cement is 1 or higher.

The cementitious binder composition of the present invention leads to good workability, open time, and adhesion strength development. Adhesion strength, in particular, can be measured in shear.

In another aspect the present invention relates to a dry mortar composition comprising the cementitious binder composition as described above and additionally comprising additives and optionally aggregates and/or fillers.

All features and embodiments as described above also apply to this aspect.

Additives within the present context are typical additives used in concrete or mortar technology with the exception of calcium sulfate and superabsorbent polymers.

According to embodiments, additives are selected from the group consisting of plasticizers and/or superplasticizers, air entrainers, defoamers, stabilizers, rheology modifiers, thickeners, accelerators, retarders, redispersible polymers, water repellent agents, strength enhancing additives, fibers, pigments and/or dyes, fire retardants, corrosion inhibitors, biocides, or mixtures of two or more of these.

In particular, a dry mortar composition of the present invention comprises at least one rheology modifier selected from starch-based or cellulose-based rheology modifiers. In particular, a dry mortar of the present invention comprises a starch-based and a cellulose-based rheology modifier. According to embodiments the additive comprises a rheology modifier which is a combination of cellulose-based thickener and starch-based thickener in a weight ratio of between 1:1 to 1:10.

Such rheology modifier can in particular stabilize the mortar composition when mixed with water against separation and can improve the workability and adhesion of the wet composition. Advantageously, the at least one rheology modifier is present in the dry mortar composition in an amount of 0.001 - 1.0 w%.

In particular, a dry mortar composition of the present invention comprises at least one redispersible polymer. Redispersible polymers preferably are used in the form of powders. Redispersible polymer powders are powders which contain a redispersible polymer and after introduction into water form a stable dispersion. A redispersible polymer powder typically encompasses not only the redispersible polymer but also protective colloids, emulsifiers, and support materials. Such redispersible polymer powders can be manufactured for example by spray drying of polymer dispersions as for example described in patent application EP 1042391 A1. Suitable redispersible polymer powders are for example available from Wacker Chemie AG under the trade name Vinnapas. The use of redispersible powders of synthetic polymers is preferred within the context of the present invention.

Preferred redispersible polymers within the present context are copolymers of vinylacetate and ethylene, vinylacetate and ethylene and methyl methacrylate, vinylacetate and ethylene and vinylester, vinylacetate and ethylene and acrylic acid ester, vinylchloride and ethylene and vinyllaurate, vinylacetate and vinylversatate, acrylic ester and styrene, acrylic ester and styrene and butadiene, acrylic ester and acrylonitrile, styrene and butadiene, acrylic acid and styrene, methacrylic acid and styrene, styrene and acrylic acid ester, styrene and methacrylic acid ester.

The glass transition temperature (Tg) of a redispersible polymer within the present context can vary in a wide range. Preferably, the polymer is soft and flexible and has a glass transition temperature of -45 °C - +10 °C, especially -35 °C - +5 °C, preferably -25 °C - 0 °C, in particular -20 °C - 0 °C, particularly preferred -20 °C - - 10°C.

Such redispersible polymers can in particular improve the flexural strength and the adhesion of the hardened mortar composition to ceramic tiles. Advantageously, the at least one redispersible polymer is present in the dry mortar composition in an amount of 1 - 10 w%, relative to the total weight of the dry mortar. Very preferably, at least one copolymer of vinylacetate and ethylene or a copolymer of vinylchloride, ethylene, and vinyllaurate is comprised in the dry mortar. In particular, the copolymer of vinylacetate and ethylene or the copolymer of vinylchloride, ethylene, and vinyllaurate is comprised in the dry mortar in an amount of 4 - 6 w%, relative to the total weight of the dry mortar.

Aggregates are materials that are not reactive in the hydration reaction of the cementitious binder composition. It is preferred within the present context that aggregates are not lightweight. This means that, preferably, aggregates have a density of not less than 2000 g/cm³. It is, however, also possible to use lightweight aggregates with a density of below 2000 g/cm³.

Within the present context, aggregates are understood to be particulate materials with a particle size of more than 0.063 mm and up to several cm. Aggregates of different chemical composition and/or of different particle size distribution may be used. A very preferred aggregate is sand.

Within the present context, fillers are understood to be particulate materials with a particle size of lower than 0.063 mm. Fillers of different chemical composition and/or of different particle size distribution may be used. Fillers, within the present context, can show a certain chemical reactivity in the hydraulic reaction of cement. For example, fillers can be pozzolanic or latent hydraulic materials. One preferred filler within the present context is ground granulated blast furnace slag. Another preferred filler is limestone.

Advantageously, aggregates and/or fillers are present in a dry mortar of the present invention in an amount of 20 - 30 w%.

According to embodiments, a dry mortar composition of the present invention comprises, in each case relative to the total dry weight of the mortar composition,
a) 50 - 75 w% of the cementitious binder composition as described above,
b) 0.001 - 1.0 w% of at least one rheology modifier,
c) 1 - 10 w% of at least one redispersible polymer,
d) optionally 0.1 - 2 w% of an accelerator,
e) optionally 0.1 - 1 w% of a water repellent agent, and
f) 20 - 30 w% of aggregates and/or fillers.

Such dry mortar compositions are particularly suitable for thinset mortar applications, especially as thinset cementitious tile adhesives.

Dry mortar compositions of the present invention can meet advanced requirements of workability, open time, and shear adhesion strength development relevant for cementitious tile adhesives. Thereby, workability and open time are suitable for practical tiling applications. Dry mortar compositions of the present invention can in particular meet requirements of open time and shear adhesion strength development for cementitious tile adhesive as laid out in standard EN 12004:2007 or in ANSI A118.4:2004.

A dry mortar composition of the present invention is essentially free from water. Essentially free means that the amount of unbound water is lower than 5 w%, preferably lower than 1 w%, relative to the total weight of the dry mortar composition. Higher amounts of water can reduce the storage stability of the dry mortar composition because setting and hardening of the cementitious binder composition starts with the addition of water.

In another aspect, the present invention relates to a method for the tiling of a surface comprising the steps of mixing the cementitious binder composition as described above or the dry mortar composition as described above with water, applying the wet mixture obtained to a surface, applying at least one tile to the applied mixture while still wet, and hardening the applied wet mixture.

All features and embodiments as described above also relate to this aspect.

The surface to be tiled is not particularly restricted. The surface preferably is flat. The surface can be horizontal or vertical or have an inclination. Especially, the surface to be tiled is a floor or a wall of a building. The surface to be tiled can also be part of a wet room, for example a swimming pool, a bathroom, or a kitchen. The surface to be tiled preferably is made of a cementitious material such as a cementitious screed or concrete. The surface to be tiled can also be made of a gypsum based material, such as a wall board or a levelling compound. However, the surface to be tiled can also be made of other materials common in the construction industry.

It is preferred that the dry mortar composition is mixed with a high amount of water. Thereby, a wet mixture is obtained. The amount of water can be adjusted to achieve a desired consistency. For example, a lower amount of water will lead to a pasty consistency while a higher amount of water will lead to a more flowable mixture. According to embodiments, the cementitious binder composition or the dry mortar composition is mixed with water in a weight ratio of powder to water of at least 0.6, preferably at least 0.7. Mixing with water in such amounts leads to preferable workability and properties of the hardened material.

Very preferably, the density of the wet mixture is between 1.3 and 2.5 kg/l, especially between 1.5 kg/l and 2.0 kg/l.

Means to mix the dry cementitious composition with water are not particular limited. It is for example possible to mix the dry mortar composition and water by means of a hand-held agitator, Hobart mixer, portable concrete mixer, mixing truck, mixing bucket, paddle mixer, jet mixer, screw mixer, auger mixer, horizontal single shaft mixer, twin shaft paddle mixer, vertical shaft mixer, ribbon blender, orbiting mixer, change-can mixer, tumbling vessel, vertical agitated chamber or air agitated operations. Mixing can be continuously, semi-continuously or batch-wise. Continuous mixing offers the advantage of a high material throughput.

Application of the wet mixture obtained to the surface can be done by any means common in the art. For example, the wet mixture can be applied by means of a trowel, a roller, or a brush. It is also possible, to apply the wet mixture by means of spraying. However, application by means of a trowel, in particular a notched trowel, is preferred.

The wet mixture can be applied in one layer or in two or more layers. Application in one layer is preferred. In thinset tiling application, the layer thickness of the wet mortar composition to be applied can be as high 4 mm. Within the present context, it is preferred to apply the wet mixture in a layer thickness of 0.25 - 2 cm.

Within the present context, the yield or coverage is defined as the surface area that can be covered starting from a given weight of dry mortar.

For example, a standard cementitious tile adhesive is mixed with a water to powder weight ratio of 0.2 and has a wet density after mixing with water of 1.6 kg/l. When applied in a layer thickness of 0.5 cm a surface of 3 m² can be tiled when starting from a 20 kg bag of dry mortar. The yield of the standard tile adhesive is 3/20 = 0.15.

A dry mortar composition of the present invention can be mixed with water in a water to powder weight ratio of 0.6. The wet density after mixing also is 1.6 kg/l. Therefore, when applied in a layer thickness of 0.5 cm a surface of 4 m² can be tiled when starting from a 20 kg bag of dry mortar. The yield of a dry mortar composition of the present invention is 4/20 = 0.2.

A dry mortar composition of the present invention therefore has a high yield or coverage, in particular a yield or coverage that is higher than that of standard cementitious tile adhesives.

Tiles used in a method of the present invention in particular are ceramic tiles. Especially, tiles are ceramic tiles with a water absorption of > 0.5 % as measured according to standard EN 1062-3.

According to embodiments, the at least one tile is a large format tile with one side being at least 35 mm long.

Preferably, the layer thickness of application of the wet mixture is adjusted to the format of the tile. For example, the wet mixture is applied in a layer thickness of appr. 1.5 to 2 cm when a large format tile with one side being at least 35 mm long is to be used.

The at least one tile must be applied to the mixture of dry mortar composition and water while still wet. In other words, the at least one tile must be applied to the wet mixture within the open time. An open time long enough to allow for application of tiles is therefore desirable. For practical application, an open time of not less than 30 minutes is desirable.

Hardening starts when a dry mortar of the present invention is mixed with water and proceeds with time. Preferably, hardening is done at a temperature of between +5 °C and +35 °C.

### Examples

Raw materials used for the following examples were Portland Limestone Cement type 1L ("PLC"), calcium aluminate cement "ciment fondu" from Imerys ("CAC"), calcium sulfate anhydrite ("CaSO₄"), crosslinked polyacrylamide superabsorbent polymer ("SAP"), a mixture of cellulose thickener, starch thickener, and redispersible polymer powder (1:3:60 by weight; "Additive"), and ground granulated blast furnace slag ("filler").

Dry mortar compositions were obtained by mixing OPC, CAC, CaSO₄, SAP, Additive, and filler in the amounts as indicated in below table 1 in a powder mixer for 3 minutes. The respective dry mortars were then mixed with the amount of water indicated in below table 1 (water to powder weight ratio w/p) for another 3 minutes. Wet mixes were tested as follows.

Workability was evaluated by a combination of visual judgement of the mix quality, and of troweling and spreading of the wet mix on a cement board. In particular, fluidity, bleeding, cohesion, and reeling were evaluated. The workability was judged on a scale of 1 to 10 (1: poor; 10: excellent).

Open time and shear strength (after 7 days of air cure) were measured according to standard ANSI 118.4. A ceramic tile of 50 x 50 mm (ANSI A137.1 Type C tile) was used for shear strength measurement.

In the following table 1, examples C-1 to C-3 are comparative examples and not according to the present invention. Examples C-1 and C-2 correspond to examples "Test-12" and "Test-13" of US 9,353,009 B2. Examples E-1 to E-4 are according to the present invention.

**Table 1: Examples compositions and results**

| | C-1 | C-2 | C-3 | E-1 | E-2 | E-3 | E-4 |
|---|---|---|---|---|---|---|---|
| PLC [g] | 58 | 60 | 60 | 32 | 27 | 24 | 15 |
| CAC [g] | 26 | 27 | 27 | 32 | 37 | 40 | 49 |
| CaSO₄ [g] | 12 | 12 | 5 | 5 | 5 | 5 | 5 |
| SAP [g] | 4 | 0.5 | 1 | 1 | 1 | 1 | 1 |
| Additive [g] | 0 | 0 | 6.4 | 6.4 | 6.4 | 6.4 | 6.4 |
| Filler [g] | 0 | 0.5 | 0.6 | 23.6 | 23.6 | 23.6 | 23.6 |
| w/p | 1.34 | 0.65 | 0.72 | 0.72 | 0.72 | 0.72 | 0.72 |
| Workability | 4 | 1 | 3 | 7 | 9 | 8 | 6 |
| Open Time [min] | 30 | 15 | 20 | 40 | 60 | 40 | 40 |
| Average shear strength @ 7d [psi] | 251 | fail | 244 | 346 | 286 | 282 | 341 |

## Claims

1. A cementitious binder composition comprising, in each case relative to the total dry weight of cementitious binder composition,
a) not more than 50 w% of Portland cement,
b) not less than 25 w% of calcium aluminate cement,
c) not more than 10 w%, preferably not more than 8 w% of calcium sulfate,
d) 1 - 2 w% of at least one superabsorbent polymer,
**characterized in that** a weight ratio of calcium aluminate cement to Portland cement is 1 or higher.

2. The cementitious binder composition as claimed in claim 1, **characterized in that** it comprises, in each case relative to the total dry weight of cementitious binder composition
a) 15 - 50 w% of Portland cement
b) 30 - 70 w% of calcium aluminate cement,
c) 3 - 8 w% of calcium sulfate, and
d) 1 - 2 w% of at least one superabsorbent polymer,
**characterized in that** a weight ratio of calcium aluminate cement to Portland cement is 1 or higher.

3. The cementitious binder composition as claimed in at least one of the preceding claims, **characterized in that** the superabsorbent polymer is selected from the group consisting of modified starches, modified celluloses, polyacrylamides, polyacrylonitriles, polyvinyl alcohols, isobutylene maleic anhydride copolymers, polyvinylpyrrolidone, homo- and copolymers of monoethylenically unsaturated carboxylic acids, such as (meth)acrylic acid, crotonic acid, sorbic acid, maleic acid, fumaric acid, itaconic acid, preferably polyacrylic acid, which can be partially or fully neutralized, and co- and terpolymers of the said monoethylenically unsaturated carboxylic acids with vinylsulfonic acid, (meth)acrylamidoalkylsulfonic acid, allylsulfonic acid, vinyltoluenesulfonic acid, vinylphosphonic acid, (meth)acrylamide, N-alkylated (meth)acrylamide, N-methylol(meth)acrylamide, N-vinylamide, N-vinylformamide, N-vinylacetamide, vinylpyrrolidon, hydroxyalkyl(meth)acrylate, ethylacrylate, methylacrylate, (meth)acrylic acid esters of polyethyleneglycolmonoallylethers, vinylacetate and/or styrene.

4. The cementitious binder composition as claimed in at least one of the preceding claims, **characterized in that** the superabsorbent polymer is selected from the group consisting of crosslinked polyacrylamides, crosslinked polyacrylates, which can be partially or fully neutralized, and mixtures thereof.

5. The cementitious binder composition as claimed in at least one of the preceding claims, **characterized in that** the calcium aluminate cement comprises Al₂O₃ and CaO in a weight ratio of Al₂O₃ to CaO of 1 or higher.

6. A dry mortar composition comprising the cementitious binder composition as claimed in at least one of the claims 1 - 5 and additionally comprising additives and optionally aggregates and/or fillers.

7. The dry mortar composition according to claim 6 comprising, in each case relative to the total dry weight of the mortar composition,
a) 50 - 75 w% of the cementitious binder composition as claimed in any of claims 1 - 5,
b) 0.001 - 1.0 w% of at least one rheology modifier,
c) 1-10 w% of at least one redispersible polymer,
d) optionally 0.1 - 2 w% of an accelerator,
e) optionally 0.1 - 1 w% of a water repellent agent, and
f) 20 - 30 w% of aggregates and/or fillers.

8. The dry mortar composition as claimed in any of claims 6-7, **characterized in that** the additive comprises a rheology modifier which is a combination of cellulose-based thickener and starch-based thickener in a weight ratio of between 1:1 to 1:10.

9. The dry mortar composition as claimed in any of claims 6-8, **characterized in that** the at least one redispersible polymer is a copolymer of vinylacetate and ethylene or is a copolymer of vinylchloride, ethylene, and vinyllaurate.

10. A method for the tiling of a surface comprising the steps of mixing a cementitious binder composition as claimed in any of claims 1 - 5 or of a dry mortar composition as claimed in any of claims 6 - 9 with water, applying the wet mixture obtained to a surface, applying at least one tile to the applied mixture while still wet, and curing the applied wet mixture.

11. The method as claimed in claim 10, **characterized in that** the cementitious binder composition or the dry mortar composition is mixed with water in a weight ratio of powder to water of at least 0.6, preferably at least 0.7.

12. The method as claimed in any of claims 10- 11, **characterized in that** the wet mixture is applied in a layer thickness of 0.25 - 2 cm.

13. The method as claimed in any of claims 10- 12, **characterized in that** the tile is a large format tile with one side being at least 35 mm long.
